# EUROPEAN PATENT SPECIFICATION

(11) **EP 4 521 142 B1**
(45) Date of publication and mention of the grant of the patent: **18.03.2026**
(21) Application number: 24198825.2
(22) Date of filing: 06.09.2024
(51) Int. Cl.: G01S 17/95, G02B 23/04, H04B 10/112, H04B 10/118

(54) **SYSTEM FOR OPTICAL COMMUNICATION AND WEATHER MEASUREMENT**
SYSTEM ZUR OPTISCHEN KOMMUNIKATION UND WETTERMESSUNG
SYSTÈME DE COMMUNICATION OPTIQUE ET DE MESURE MÉTÉOROLOGIQUE

(30) Priority: 11.09.2023 US 202363581929 P; 09.08.2024 US 202418799287
(43) Date of publication of application: 12.03.2025
(73) Proprietor: Honeywell International Inc., Charlotte, NC 28202 (US)
(72) Inventor: WIEBOLD, Matthew, Charlotte, 28202 (US); SCOTT, Alan, Charlotte, 28202 (US); CSIZMAR, Andrew, Charlotte, 28202 (US); SALSBURY, Marc, Charlotte, 28202 (US); DOBBINS, Thomas, Charlotte, 28202 (US)
(74) Representative: Haseltine Lake Kempner LLP

(56) References cited:
- CN-A- 112 511 239
- US-B1- 9 450 670
- THOMAS WEYRAUCH ET AL: "Free-space laser communications with adaptive optics: Atmospheric compensation experiments", JOURNAL OF OPTICAL AND FIBER COMMUNICATIONS REPORTS, SPRINGER-VERLAG, NE, vol. 1, no. 4, 1 December 2004 (2004-12-01), pages 355 - 379, XP019368501, ISSN: 1619-8638

## Description

### BACKGROUND

Technology that has avionics applications include satellite optical communications systems and active weather light detection and ranging (LiDAR) systems. Satellite optical communication systems employ telescopes and optical-mechanical components to send and receive laser communications. Satellite optical communication systems can achieve high data rates with a reduction in power consumption and size over traditional radio frequency (RF) communications. Further, satellite optical communication systems avoid significant regulatory burdens of RF spectrum allocation while providing high carrier frequencies and narrow bandwidths. Communications through a satellite optical communication system is achieved with laser beams that are modulated with communication signals. The laser beams are precisely directed between transmit and receive terminals that are located at an associated communication satellite and ground station. Typically, the ground station includes a positioning mechanism that is used to precisely align and keep aligned transmit and receive terminals in the ground station with transmit and receive terminals in the communication satellite as the earth rotates.

A weather LiDAR system is used to measure atmospheric properties in the earth's atmosphere at high altitudes by measuring reflected or scattered back laser light from laser beams generated by a LiDAR laser of the LiDAR. The atmospheric properties may include atmospheric pressure, temperature, humidity, wind speed, wind direction, aerosol measurement, optical turbulence, gas sensing, etc. A weather LiDAR system is typically located in a ground station and includes a transmit system to transmit the laser beams into the atmosphere, a receiver system to receive reflected back laser beams, a processing system to interpret data from the transmitted and received reflected back laser beams (light), and a positioning system configured to point the weather LiDAR device to a desired portion of the atmosphere to be monitored.

THOMAS WEYRAUCH ET AL: "Free-space laser communications with adaptive optics: Atmospheric compensation experiments", JOURNAL OF OPTICAL AND FIBRE COMMUNICATIONS REPORTS, SPRINGER-VERLAG, NE, vol. 1, no. 4, 1 December 2004 (2004-12-01), pages 355-379 discloses an experimental adaptive optics system that consists of a beam steering and a higher-resolution wave-front correction unit with a 132-actuator MEMS piston-type deformable mirror controlled by a VLSI system implementing the SPGD algorithm.

CN112511239A discloses a coherent receiving device and an anemometry lidar system. The coherent receiving device includes: a polarization maintaining optical fiber pin, configured to receive local oscillation light and output it to a frequency mixer; a polarization beam splitting prism, configured to receive signal light, split it into first and second signal light, and output them to the frequency mixer; the frequency mixer, configured to mix the first and second signal light with the local oscillation light and output the mixed light to a PD array.

### SUMMARY

The invention is defined by the independent claims. Preferred embodiments are listed in the dependent claims. In one embodiment a system for optical communication and weather measurement is provided. The system includes a shared telescope, an optical communication system and a weather LiDAR system. The shared telescope is used to at least collect and focus laser beams. The optical communication system includes and optical communication transceiver and optical communication beam steering optics. The optical communication transceiver includes a communication laser that is configured to generate transmit communication laser beams. The optical communication beam steering optics are configured to steer the generated transmit communication laser beams to a communication satellite. The optical communication beam steering optics further are configured to steer received communication laser beams from the shared telescope to the optical communication transceiver. The weather LiDAR system includes a LiDAR laser, LiDAR beam steering optics and LiDAR weather instruments. The LiDAR laser is used to generate transmit weather laser beams. The LiDAR beam steering optics are configured to direct the generated transmit weather laser beams. The LiDAR weather instruments are configured to process scattered laser light captured by the shared telescope to determine environmental information. An adaptive optics system is configured to adjust for atmospheric distortion, wherein the adaptive optics system is positioned in a combined transmit and receive path between the shared telescope and the optical communication beam steering optics.

In yet another embodiment, a method of operating a system for optical communication and weather measurement is provided, according to independent caim 7.

### BRIEF DESCRIPTION OF THE DRAWINGS

The present invention can be more easily understood and further advantages and uses thereof will be more readily apparent, when considered in view of the detailed description and the following figures in which:
Figure 1 illustrates a block diagram of an optical communication and weather LiDAR combined system according to an example;
Figure 2 is an optical communication and weather LiDAR combined system operation flow diagram according to an example aspect of the present invention;
Figure 3 is another optical communication and weather LiDAR combined system operation flow diagram according to an example aspect of the present invention;
Figure 4 illustrates an adaptive optics system according to an example aspect of the present invention; and
Figure 5 illustrates the use of two wavefront sensors according to an example aspect of the present invention.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention. The following detailed description is, therefore, not to be taken in a limiting sense, and the scope of the present invention is defined only by the claims.

Embodiments of the present invention provide a system for optical communication and weather measurement. In examples, a core telescope and optics of a optical communication system and a weather light detection and ranging (LiDAR) of a ground station are shared. Further in some examples, support infrastructure, such as but not limited to, a container, heating ventilation and air conditioning (HVAC), safety, and power/thermal systems are also shared. In one example, a switching system in the backend of the combined systems is used to allow either optical communications through the optical communication system or weather measurements through the weather LiDAR system. In another embodiment, the optical communications and weather measurements are done without switching between systems.

Combining hardware of the two systems (optical communication system and weather LiDAR system) provides improved system functionality with minimal replication of hardware, thus decreasing cost of a network rollout compared to two independent sets of systems, while providing both atmospheric information and communication functions. Further embodiments provide a remote command station (ground station) with access to situational awareness and high speed data communications in a compact package.

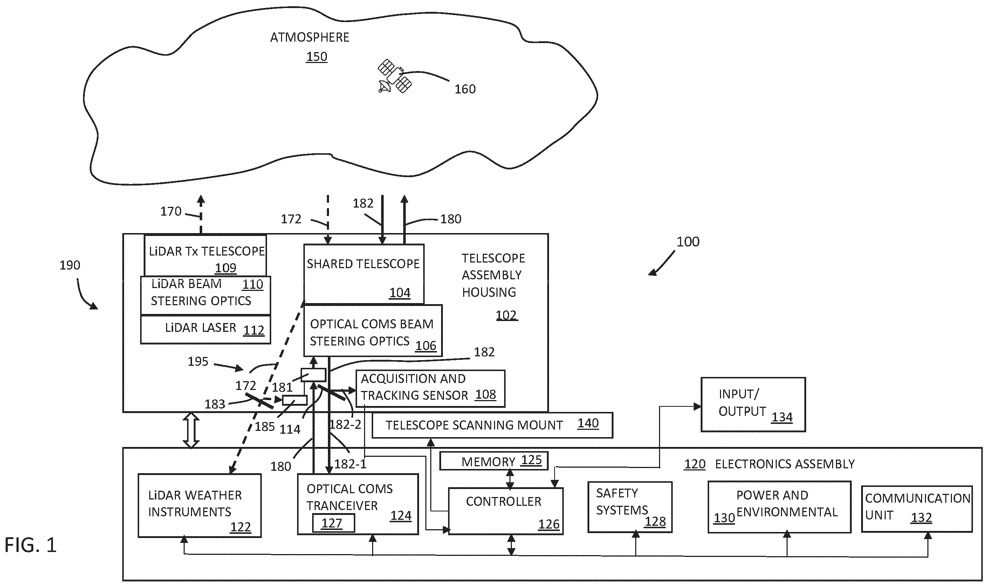

Referring to Figure 1, system for optical communication and weather measurement 100 is illustrated. As discussed above, this system may be part of a ground station in one example. The optical communication system 195 of the system for optical communication and weather measurement 100 includes an optical communication (COMS) transceiver 124 in an electronic assembly 120 in this example. The optical communication transceiver 124 includes a communication laser 127 that is designed to generate a ground communication laser beam 180 that is modulated to include communication messages intended to be transmitted to a satellite 160. The optical communication transceiver 124 transmits the ground communication laser beam 180 to optical communication beam steering optics 106 in a telescope assembly housing 102 (container). The optical communication beam steering optics 106 may include mirrors, polarizing rotators, etc. used to direct the ground communication laser beam 180 through a shared telescope 104, that collects/captures, laser beams, focuses laser beams, and expands transmissions to the communication satellite 160. Optical communication laser beam 182 transmitted by satellite 160 are received by shared telescope 104, steered through the optical communication beam steering optics 106 to a beam splitter 114. The beam splitter 114 splits the received optical communication laser beam 182. Examples of beam splitters that may be used include, but are not limited to, a mirror beam splitter and a dichroic beamsplitter. A first portion of the optical communication laser beam 182-1 is directed to the optical communication transceiver 124 where the optical communication laser beam 182-1 is demodulated to extract a communication signal. A second portion of the optical communication laser beam 182-2 is directed to an acquisition and tracking sensor 108.

The received optical communication laser beam 182-2 from the accusation and tracking sensor 108 is used to determine needed positioning of the telescope assembly housing 102 to acquire and track the communication satellite 160 to achieve communications with the satellite 160 as the satellite moves relative to the ground station that includes the system for optical communication and weather measurement 100. In one example, a telescope scanning mount 140 is used to move (position) the telescope assembly housing 102 to track and maintain communications with satellite 160 based, at least in part, on acquisition and tracking sensor information from the acquisition and tracking sensor 108. In one example, controller 126 discussed below, based on the acquisition and tracking sensor information from the acquisition and tracking sensor 108, selectively moves the telescope scanning mount 140 to selectively position the shared telescope 104.

A controller 126 in the electronics assembly 120, based at least in part on instructions stored in a memory 125, controls the optical communication transceiver 124 in an example. In general, the controller 126 may include any one or more of a processor, microprocessor, a digital signal processor (DSP), an application specific integrated circuit (ASIC), a field program gate array (FPGA), or equivalent discrete or integrated logic circuitry. In some example embodiments, controller 126 may include multiple components, such as any combination of one or more microprocessors, one or more controllers, one or more DSPs, one or more ASICs, one or more FPGAs, as well as other discrete or integrated logic circuitry. The functions attributed to controller 126 herein may be embodied as software, firmware, hardware or any combination thereof. Controller 126 may be part of a system controller or a component controller. Memory 125 may include computer-readable operating instructions that, when executed by controller 126 provides functions of the system for optical communication and weather measurement 100. Such functions may include the functions of adjusting the position of the telescope assembly housing 102, switching between use of the optical communication system 195 and the weather LiDAR system 190, as well as other functions discussed below. The computer readable instructions may be encoded within memory 125. Memory 125 is an appropriate non-transitory storage medium or media including any volatile, nonvolatile, magnetic, optical, or electrical media, such as, but not limited to, a random access memory (RAM), read-only memory (ROM), non-volatile RAM (NVRAM), electrically-erasable programmable ROM (EEPROM), flash memory, or any other storage medium.

The weather LiDAR system 190 of the system for optical communication and weather measurement 100 includes a LiDAR laser 112 that is designed to generate transmit weather laser beams 170. Weather laser beams 170 are directed into the atmosphere 150 by LiDAR beam steering optics 110 through a LiDAR Tx telescope 109. The LiDAR beam steering optics 110 may include one or more mirrors and a beam shaping assembly in one example. Scattered laser light 172 (scattered laser beams), as the result of the photons of a weather laser beam 170 being scattered off of atmospheric molecules and aerosols, is received by the shared telescope 104 and directed to LiDAR weather instruments 122. The LiDAR weather instruments 122 of the weather LiDAR system 190 analyze the transmitted weather laser beam 170 and scattered laser light 172 to determine environmental information in the atmosphere.

Other elements that may be shared in the electronics assembly 120 of the system for optical communication and weather measurement 100 include safety systems 128, power and environmental systems 130 and a communication unit 132 in this example. The communication unit 132 may be used to communicate weather information determined by the weather LiDAR system 190 and for the communications provided by the optical communication system 195 to a remote location. The communication unit 132 may provide a cellular, WiFi, wired, etc. interface to an operator network. Further in an example, a shared input/output 134 is provided to allow for a user to input instructions to the controller 126. The input/output 134 may also include a display to display outputs of the combined system 100.

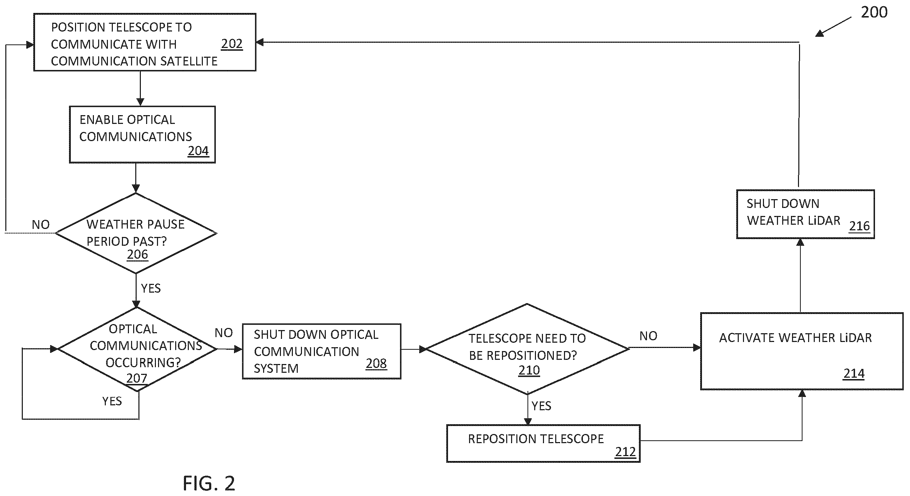

Referring to Figure 2, a method of operating the system for optical communication and weather measurement 100 is provided in an optical communication and weather LiDAR combined system flow diagram 200. The optical communication and weather LiDAR system flow diagram 200 is provided as a series of sequential blocks that may be performed under the direction of the controller 126 implementing operating instructions stored in memory 125. The sequence, however, may be different or even in parallel in other embodiments. Hence the present invention is not limited to the sequence as set out in the optical communication and weather LiDAR system flow diagram 200.

The optical communication and weather LiDAR system flow diagram 200 starts at block 202 by positioning the shared telescope 104 of the system for optical communication and weather measurement 100 to communicate with communication satellite 160. This may be done with movement of the telescope scanning mount 140. In one example, the controller is configured to position the telescope scanning mount 140 and hence the shared telescope based at least in part on acquisition and tracking information from the acquisition and tracking sensor 108.

Once shared telescope 104 is positioned to communicate with communication satellite 160, the optical communication system 195 is enabled at block 204. This is done, in an example, by activating the optical communication system. At block 206 it is determined if a weather pause period has passed. In this example, measurements of the atmospheric environment are periodically taken. For example, measurements of the atmospheric environment may only be taken every 20 minutes or so.

If it is determined at block 206, the weather pause period has passed at block 206, it may then be determined if optical communications are then currently occurring at block 207. In this example, a measurement of the atmospheric environment is not taken until there is a break in the optical communications. Once it is determined at block 207 that there are no current optical communications taking place, in this example, the optical communication system 195 is shut down at block 208. This may, in an example, include shutting down power to at least some of the components of the optical communication system 195 at block 208 including at least some of the components in the optical communication transceiver 124. In another example, block 207 determines when communications are over for example by determining if all packets have been sent back and forth and a communication window has elapsed.

It is then determined at block 210 if the shared telescope needs to be repositioned to obtain measurements of a specific location in the atmosphere. If it is determined at block 210 that the shared telescope needs to be repositioned, the shared telescope is repositioned at block 212. Once the shared telescope is in the desired position, the weather LiDAR is activated at block 214 and atmospheric measurements are taken. Once the atmospheric measurements are taken, the weather LiDAR system 190 is shut down at block 216 and the process continues at block 202. In an example, at least some of the components of the weather LiDAR system 190 are shut down at block 216 including the LiDAR laser 112.

The example, set out in the optical communication and weather LiDAR system flow diagram 200, switches between either the optical communication system 195 or the weather LiDAR system 190. In another example, both systems may remain active during operation. In this example, wave bands used by each system are far enough apart, so the signals are easy to separate in the shared telescope 104 and direct to the desired receiver. For example, one system may use a waveband in the ultraviolet (UV) range and the other system may use a wave band in the infrared (IR) range. Further in an example, an external command from the input/output 134 or from a remote location through the communication unit 132 may be used to direct the optical communication and weather LiDAR combined system 100 to take measurements with the weather LiDAR.

The system for optical communication and weather measurement 100 may work together to provide an improved optical communication system. For example, the weather LiDAR system 190 may be used by controller 126 to gain information to enhance communications between the ground station that includes the combined system 100 and communication satellites, such as satellite 160. In this example, the weather laser beams 170 of the weather LiDAR system 190 are directed in the same direction of the transmit communication laser beam 180.

Orbiting communication satellites are moving with a transverse velocity (i.e., the transmit communication laser beam 180 needs to be pointed ahead of the angle where the received communication laser beam 182 is detected, effectively "leading" the apparent position of the satellite). Because of this angular offset between the transmit communication laser beam 180 and the received communication laser beam 182, a communication satellite beacon may not be used to measure and correct for atmospheric distortions in the transmit direction.

Controller 126 may direct the weather LiDAR to create an artificial guide star, such as a Rayleigh artificial guide star, used in the direction of the transmit communication laser beam 180 from the optical communication system 195to correct for the atmospheric distortions instead of a communication satellite beacon. An artificial guide star is a strategy in astronomical telescopes to allow for the removal of atmospheric distortions.

Reyleigh beacons rely on the scattering of light by the molecules in the lower atmosphere. The LiDAR laser 112 may be pulsed with the measurement of the atmosphere being time-gated, taken place several microseconds after the pulse has been launched, so that scattered light at a ground level is ignored and only light that has traveled for several microseconds (i.e., reached farther up into the atmosphere and back) is detected and processed.

In an example, not covered by the claims, adaptive optics 181 such as a deformable mirror or a spatial phase modulator, is positioned within the transmit path of the transmit communication laser beam 180 between the optical communication transceiver 124 and the optical communication beam steering optics 106. The adaptive optics 181 is adjusted based on the artificial guide star to pre-correct the transmit communication laser beam 180 in one example. Further in an example, a scatter laser light beam splitter 183 is used to direct a portion of the scatter laser light 172 to a wavefront sensor 185 that monitors the scatter laser light coming back from the artificial guide star created by the LiDAR laser 112 in the atmosphere.

Based on the created artificial laser guide star in the direction of the transmit communication laser beam 180, the adaptive optics 181 may be used to pre-correct the outgoing wavefront in the transmit communication laser beam 180 to significantly improve the odds of hitting an associate communication satellite 160 with the transmit communication laser beam 180.

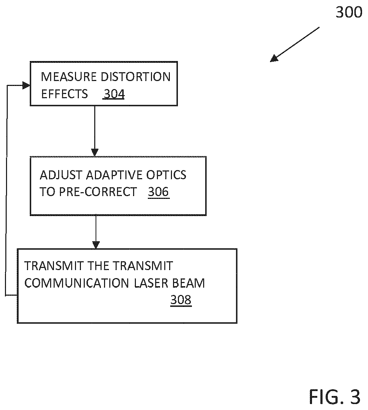

An example method of this is illustrated in an optical communication and weather LiDAR combined system operation flow diagram 300 of Figure 3. The optical communication and weather LiDAR combined system operation flow diagram 300 is provided as a series of sequential blocks that may be performed under the direction of the controller 126 implementing operating instructions stored in memory 125. The sequence, however, may be different or even in parallel in other embodiments. Hence the present invention is not limited to the sequence as set out in the optical communication and weather LiDAR combined system operation flow diagram 300.

The distortion effects in the atmosphere 150 in the direction of a transmit optical communication laser beam are determined at block 304 by creating an artificial guide star with scattered laser light. In one example, this is done with the LiDAR weather instruments 122 analyzing the scattered laser light 172 that pass through the shared telescope. Further in an example, discussed above, a wavefront sensor 185 monitoring the scattered laser light 172 is used to generate a Rayleigh beacon guide star. The artificial guide star in the direction of a transmit optical communication laser beam is then used at block 306 to adjust the adaptive optics in the optical communication beam steering optics 106. At block 308, the transmit optical communication laser beam is then transmitted and the process continues at block 304. The transmit optical communication laser beam passes through the shared telescope 104.

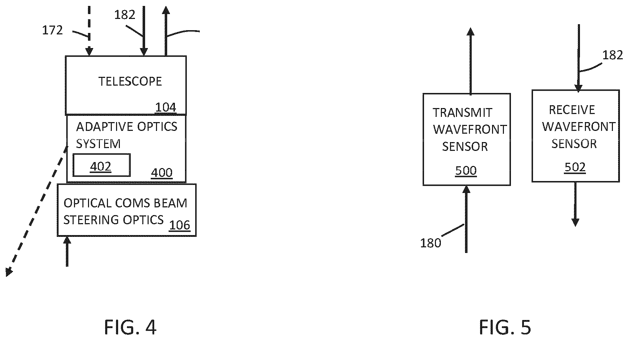

In an embodiment that adjusts for atmospheric distortions with the system for optical communication and weather measurement 100, an adaptive optics system 400 is placed in the combined transmit and receive path between the shared telescope 104 and the optical communication beam steering optics 106 as Illustrated in Figure 4. This example would not rely on an artificial guide star but would instead use a satellite beacon as a light source to measure the state of the atmosphere along the receive optical path. Although this example would not do as good of a job of correcting the outgoing transmitted communication laser beam (because it follows a slightly different atmospheric path leading the image of the satellite), it would improve the performance of the receiver significantly. The adaptive optics system 400 in this example would include a deformable mirror 402 behind the shared telescope 104, followed by a pick-off beam splitter 183 and a wavefront sensor 185, similar to the previous option.

Further in another example, two wavefront sensors are used. An example of this is illustrated in Figure 5. A transmit wavefront sensor 500 is positioned in a transmit communication laser beam path of the transmit communication laser beam 180 and is configured to look at an artificial guide star directed along a point-ahead path. A receive wavefront sensor 502 is positioned in a receive communication laser beam path of the received optical communication laser beam 182 and is configured to look at the satellite beacon. Each wavefront sensor (the transmit wavefront sensor 500 and the receive wavefront sensor 502) may be used to correct the distortion along each unique optical path independently.

The invention is limited only by the claims.

## Claims

1. A system (100) for optical communication and weather measurement, the system (100) comprising:
a shared telescope (104) to at least collect and focus laser beams (172, 182 and 180);
an optical communication system (195) including,
an optical communication transceiver (124) including a communication laser (127) configured to generate transmit communication laser beams (180), and
optical communication beam steering optics (106) configured to steer the generated transmit communication laser beams to a communication satellite (160), the optical communication beam steering optics (106) further configured to steer received communication laser beams (182) from the shared telescope (104) to the optical communication transceiver (124);
**characterized in that** the system (100) further comprises a weather LiDAR system (190) including,
a LiDAR laser (112) to generate transmit weather laser beams (170),
LiDAR beam steering optics (110) configured to direct the generated transmit weather laser beams (170), and
LiDAR weather instruments (122) configured to process scattered laser light (172) captured by the shared telescope (104) to determine environmental information; and
an adaptive optics system (400) configured to adjust for atmospheric distortion, wherein the adaptive optics system is positioned in a combined transmit and receive path between the shared telescope and the optical communication beam steering optics.

2. The system (100) of claim 1, further comprising:
a beam splitter (114) positioned to split the received communication laser beams (182) from the optical communication beam steering optics (106); and
an acquisition and tracking sensor (108) positioned to receive a portion (182-2) of the received communication laser beams (182) from the beam splitter (114).

3. The system (100) of claim 2, further comprising:
a telescope assembly housing (102) containing at least the shared telescope (104), the optical communication beam steering optics (106), the LiDAR laser (112), and the LiDAR beam steering optics (110); and
a telescope scanning mount (140) configured to move the telescope assembly housing (102).

4. The system (100) of claim 3, further comprising:
a controller (126) configured to selectively position the telescope scanning mount (140) based at least in part on information from the acquisition and tracking sensor (108); and
a memory (125) to store operating instructions implemented by the controller (126).

5. The system (100) of claim 4, wherein the controller (126) is configured to selectively switch operations of the system (100) between the optical communication system (195) and the weather LiDAR system (190).

6. The system (100) of claim 4, wherein the controller (126) is configured to position the telescope assembly housing (102) to communicate with the communication satellite (160).

7. A method of operating a system (100) for optical communication and weather measurement, the method comprising:
positioning a shared telescope (104) for at least one of communications with a satellite (160) and taking an atmospheric measurement;
using the shared telescope (104) when transmitting communication laser beams (180) and receiving communication laser beams (182) from the satellite (160) when using an optical communication system (195) for the communications, the optical communication system (195) comprising an optical communication transceiver (124) including a communication laser (127) configured to generate transmit communication laser beams (180);
using optical communication beam steering optics (106) to steer the generated transmit communication laser beams to the satellite (160);
using the optical communication beam steering optics (106) to steer received communication laser beams (182) from the shared telescope (124) to the optical communication transceiver (124);
**characterized in that** the method further comprises
using the shared telescope (104) to capture scatter laser light (172) scattered off of atmospheric molecules and aerosols and focus the captured scattered laser light (172) to LiDAR weather instruments (122) when taking the atmospheric measurement with a weather LiDAR system (190); and
using an adaptive optics system (400) to adjust for atmospheric distortion, the adaptive optics system (400) being positioned in a combined transmit and receive path between the shared telescope (104) and the optical communication beam steering optics (106).

8. The method of claim 7, further comprising:
shutting down at least some components of one of the optical communication system (195) and the weather LiDAR system (190) when another of the optical communication system (195) and the weather LiDAR system (190) is being used.

9. The method of claim 7, further comprising:
splitting the received communication laser beams (182) so that a portion (182-2) of each received optical communication laser beam (182) is directed to an acquisition and tracking sensor (108); and
acquiring and tracking the communication satellite (160) based on acquisition and tracking sensor information from the acquisition and tracking sensor (108).

## Patentansprüche

1. System (100) zur Optikkommunikation und Wettermessung, das System (100) umfassend:
ein gemeinsames Teleskop (104), um Laserstrahlen (172, 182 und 180) mindestens zu sammeln und zu fokussieren;
ein Optikkommunikationssystem (195), beinhaltend:
einen Optikkommunikations-Sender-Empfänger (124), der einen Kommunikationslaser (127) beinhaltet, der dazu konfiguriert ist, Sendekommunikationslaserstrahlen (180) zu erzeugen, und
Optikkommunikationsstrahl-Lenkoptik (106), die dazu konfiguriert ist, den erzeugten Sendekommunikationslaserstrahl zu einem Kommunikationssatelliten (160) zu lenken, wobei die Optikkommunikationsstrahl-Lenkoptik (106) ferner dazu konfiguriert ist, empfangene Kommunikationslaserstrahlen (182) von dem gemeinsamen Teleskop (104) an den Optikkommunikations-Sender-Empfänger (124) zu lenken;
**gekennzeichnet dadurch, dass** das System (100) ferner ein Wetter-LiDAR-System (190) umfasst, das Folgendes beinhaltet:
einen LiDAR-Laser (112), um Wetterlaserstrahlen (170) zu erzeugen,
LiDAR-Strahl-Lenkoptik (110), die dazu konfiguriert ist, die erzeugten Sendewetterlaserstrahlen (170) zu leiten, und
LiDAR-Wetterinstrumente (122), die dazu konfiguriert sind, gestreutes Laserlicht (172), das von dem gemeinsamen Teleskop (104) eingefangen wird, zu verarbeiten, um Umgebungsinformationen zu bestimmen; und
ein adaptives Optiksystem (400), das dazu konfiguriert ist, eine atmosphärische Verzerrung zu bereinigen, wobei das adaptive Optiksystem in einem kombinierten Sende- und Empfangspfad zwischen dem gemeinsamen Teleskop und der Optikkommunikationsstrahl-Lenkoptik positioniert ist.

2. System (100) nach Anspruch 1, ferner umfassend:
einen Strahlteiler (114), der dazu positioniert ist, die empfangenen Kommunikationslaserstrahlen (182) von der Optikkommunikationsstrahl-Lenkoptik (106) zu teilen; und
einen Erfassungs- und Trackingsensor (108), der dazu positioniert ist, einen Teil (182-2) der empfangenen Kommunikationslaserstrahlen (182) von dem Strahlteiler (114) zu empfangen.

3. System (100) nach Anspruch 2, ferner umfassend:
ein Teleskopbaugruppengehäuse (102), das mindestens das gemeinsame Teleskop (104), die Optikkommunikationsstrahl-Lenkoptik (106), den LiDAR-Laser (112) und die LiDAR-Strahl-Lenkoptik (110) enthält; und
eine Teleskopabtasthalterung (140), die dazu konfiguriert ist, das Teleskopbaugruppengehäuse (102) zu bewegen.

4. System (100) nach Anspruch 3, ferner umfassend:
eine Steuerung (126), die dazu konfiguriert ist, die Teleskopabtasthalterung (140) selektiv auf Basis mindestens teilweise von Informationen aus dem Erfassungs- und Trackingsensor (108) zu positionieren; und
einen Speicher (125), um Betriebsanweisungen, die von der Steuerung (126) implementiert werden, zu speichern.

5. System (100) nach Anspruch 4, wobei die Steuerung (126) dazu konfiguriert ist, selektiv Betriebsvorgänge des Systems (100) zwischen dem Optikkommunikationssystem (195) und dem Wetter-LiDAR-System (190) umzuschalten.

6. System (100) nach Anspruch 4, wobei die Steuerung (126) dazu konfiguriert ist, das Teleskopbaugruppengehäuse (102) zu positionieren, um mit dem Kommunikationssatelliten (160) zu kommunizieren.

7. Verfahren zum Betreiben eines Systems (100) zur Optikkommunikation und Wettermessung, das Verfahren umfassend:
Positionieren eines geteilten Teleskops (104) für mindestens eines aus Kommunikationen mit einem Satelliten (160) und Durchführen einer atmosphärischen Messung;
Verwenden des gemeinsamen Teleskops (104) beim Senden von Kommunikationslaserstrahlen (180) und Empfangen von Kommunikationslaserstrahlen (182) von dem Satelliten (160) beim Verwenden eines Optikkommunikationssystems (195) für die Kommunikationen, wobei das Optikkommunikationssystem (195) einen Optikkommunikations-Sender-Empfänger (124) umfasst, der einen Kommunikationslaser (127) beinhaltet, der dazu konfiguriert ist, Sendekommunikationslaserstrahlen (180) zu erzeugen;
Verwenden einer Optikkommunikationsstrahl-Lenkoptik (106), um die erzeugten Sendekommunikationslaserstrahlen zu dem Satelliten (160) zu lenken;
Verwenden der Optikkommunikationsstrahl-Lenkoptik (106), um empfangene Kommunikationslaserstrahlen (182) von dem gemeinsamen Teleskop (124) zu dem Optikkommunikations-Sender-Empfänger (124) zu lenken;
**gekennzeichnet dadurch, dass** das Verfahren ferner das Verwenden des gemeinsamen Teleskops (104) umfasst, um von atmosphärischen Molekülen und Aerosolen gestreutes Streulaserlicht (172) einzufangen und das eingefangene gestreute Laserlicht (172) auf LiDAR-Wetterinstrumente (122) zu fokussieren, wenn die atmosphärische Messung mit einem Wetter-LiDAR-System (190) durchgeführt wird; und
Verwenden eines adaptiven Optiksystem (400), um eine atmosphärische Verzerrung zu bereinigen, wobei das adaptive Optiksystem (400) in einem kombinierten Sende- und Empfangspfad zwischen dem gemeinsamen Teleskop (104) und der Optikkommunikationsstrahl-Lenkoptik (106) positioniert ist.

8. Verfahren nach Anspruch 7, ferner umfassend:
Stilllegen von mindestens einigen Komponenten von einem von dem Optikkommunikationssystem (195) und dem Wetter-LiDAR-System (190), wenn ein anderes von dem Optikkommunikationssystem (195) und dem Wetter-LiDAR-System (190) verwendet wird.

9. Verfahren nach Anspruch 7, ferner umfassend:
Teilen der empfangenen Kommunikationslaserstrahlen (182), sodass ein Teil (182-2) von jedem empfangen Optikkommunikationslaserstrahl (182) zu einem Erfassungs- und Trackingsensor (108) geleitet wird; und
Erfassen und Tracken des Kommunikationssatelliten (160) auf Basis von Erfassungs- und Trackingsensorinformationen von dem Erfassungs- und Trackingsensor (108).

## Revendications

1. Système (100) de communication optique et de mesure météorologique, le système (100) comprenant :
un télescope partagé (104) destiné au moins à collecter et focaliser des faisceaux laser (172, 182 et 180) ;
un système de communication optique (195) incluant :
un émetteur-récepteur de communication optique (124) incluant un laser de communication (127) configuré pour générer des faisceaux laser de communication (180) émis, et
des optiques de pointage de faisceau de communication optique (106) configurées pour diriger les faisceaux laser de communication émis générés vers un satellite de communication (160), les optiques de pointage de faisceau de communication optique (106) étant en outre configurées pour diriger les faisceaux laser de communication (182) reçus provenant du télescope partagé (104) vers l'émetteur-récepteur de communication optique (124) ;
**caractérisé en ce que** le système (100) comprend en outre un système LiDAR météorologique (190) incluant,
un laser LiDAR (112) pour générer des faisceaux laser météorologiques (170) émis,
des optiques de pointage de faisceau LiDAR (110) configurées pour diriger les faisceaux laser météorologiques (170) émis générés, et
des instruments météorologiques LiDAR (122) configurés pour traiter la lumière laser diffusée (172) captée par le télescope partagé (104) afin de déterminer des informations environnementales ; et
un système d'optique adaptative (400) configuré pour compenser la distorsion atmosphérique, dans lequel le système d'optique adaptative est positionné dans un trajet d'émission et de réception combiné entre le télescope partagé et les optiques de pointage de faisceau de communication optique.

2. Système (100) de la revendication 1, comprenant en outre :
un séparateur de faisceau (114) positionné pour diviser les faisceaux laser de communication (182) reçus provenant des optiques de pointage de faisceau de communication optique (106) ; et
un capteur d'acquisition et de poursuite (108) positionné pour recevoir une portion (182-2) des faisceaux laser de communication (182) reçus provenant du séparateur de faisceau (114).

3. Système (100) de la revendication 2, comprenant en outre :
un logement d'ensemble télescope (102) contenant au moins le télescope partagé (104), les optiques de pointage de faisceau de communication optique (106), le laser LiDAR (112) et les optiques de pointage de faisceau LiDAR (110) ; et
un support de balayage de télescope (140) configuré pour déplacer le logement d'ensemble télescope (102).

4. Système (100) de la revendication 3, comprenant en outre :
un contrôleur (126) configuré pour positionner de manière sélective le support de balayage de télescope (140) sur la base, au moins en partie, d'informations provenant du capteur d'acquisition et de poursuite (108) ; et
une mémoire (125) destinée à stocker des instructions de fonctionnement mises en œuvre par le contrôleur (126).

5. Système (100) de la revendication 4, dans lequel le contrôleur (126) est configuré pour commuter de manière sélective le fonctionnement du système (100) entre le système de communication optique (195) et le système LiDAR météorologique (190).

6. Système (100) de la revendication 4, dans lequel le contrôleur (126) est configuré pour positionner le logement d'ensemble télescope (102) afin de communiquer avec le satellite de communication (160).

7. Procédé de fonctionnement d'un système (100) de communication optique et de mesure météorologique, le procédé comprenant :
le positionnement d'un télescope partagé (104) pour au moins l'une parmi des communications avec un satellite (160) et la prise d'une mesure atmosphérique ;
l'utilisation du télescope partagé (104) lors de l'émission de faisceaux laser de communication (180) et de la réception de faisceaux laser de communication (182) provenant du satellite (160) lorsque l'on utilise un système de communication optique (195) pour les communications, le système de communication optique (195) comprenant un émetteur-récepteur de communication optique (124) incluant un laser de communication (127) configuré pour générer des faisceaux laser de communication (180) émis ;
l'utilisation des optiques de pointage de faisceau de communication optique (106) pour diriger les faisceaux laser de communication émis générés vers le satellite (160) ;
l'utilisation des optiques de pointage de faisceau de communication optique (106) pour diriger les faisceaux laser de communication (182) reçus provenant du télescope partagé (124) vers l'émetteur-récepteur de communication optique (124) ;
**caractérisé en ce que** le procédé comprend en outre l'utilisation du télescope partagé (104) pour capter la lumière laser diffusée (172) diffusée par des molécules atmosphériques et des aérosols et focaliser la lumière laser diffusée (172) captée vers des instruments météorologiques LiDAR (122) lors de la prise de la mesure atmosphérique avec un système LiDAR météorologique (190) ; et
l'utilisation d'un système d'optique adaptative (400) pour compenser la distorsion atmosphérique, le système d'optique adaptative (400) étant positionné dans un trajet d'émission et de réception combiné entre le télescope partagé (104) et les optiques de pointage de faisceau de communication optique (106).

8. Procédé de la revendication 7, comprenant en outre :
l'arrêt d'au moins certains composants de l'un parmi le système de communication optique (195) et le système LiDAR météorologique (190) lorsqu'un autre parmi le système de communication optique (195) et le système LiDAR météorologique (190) est utilisé.

9. Procédé de la revendication 7, comprenant en outre :
la division des faisceaux laser de communication (182) reçus de sorte qu'une portion (182-2) de chaque faisceau laser de communication (182) optique reçu soit dirigée vers un capteur d'acquisition et de poursuite (108) ; et
l'acquisition et la poursuite du satellite de communication (160) sur la base des informations de capteur d'acquisition et de poursuite provenant du capteur d'acquisition et de poursuite (108).
